# EUROPEAN PATENT SPECIFICATION

(11) **EP 1 546 598 B1**
(45) Date of publication and mention of the grant of the patent: **26.11.2008**
(21) Application number: 03761004.5
(22) Date of filing: 24.06.2003
(51) Int. Cl.: F16L 33/26

(54) **METHOD AND MEANS FOR MOUNTING A HOSE CONNECTION TO A FLEXIBLE METAL HOSE COMPRISING A CORRUGATED INNER HOSE SURROUNDED BY A BRAIDED COVERING**
VERFAHREN UND MITTEL ZUR BEFESTIGUNG EINER SCHLAUCHVERBINDUNG AN EINEM FLEXIBLEN METALLSCHLAUCH MIT EINEM VON EINER GEFLOCHTETEN UMMANTELUNG UMGEBENEN GEWELLTEN INNEREN SCHLAUCH
PROCEDE DE PRODUCTION D'UN RACCORD DE TUYAU FLEXIBLE

(30) Priority: 25.06.2002 SE 0201951
(43) Date of publication of application: 29.06.2005
(73) Proprietor: Svarvare, Bertil, 975 96 Lulea (SE)
(72) Inventor: Svarvare, Bertil, 975 96 Lulea (SE)
(74) Representative: Onn, Thorsten
(86) International application number: PCT/SE2003/001089
(87) International publication number: WO 2004/001271

(56) References cited:
- DE-U1- 20 121 607
- GB-A- 804 583
- GB-A- 809 903
- US-B1- 6 260 584

## Description

The present invention concerns a means and a method of manufacturing a hose coupling as described in the preamble to claim 1.

Flexible metal hose has many uses today, such as on installations demanding hoses with high resistance to high pressure, high temperatures and wear. The hoses are intended to convey all types of media, such as oil, foodstuffs and the like. These hoses are often constructed with a braided metal covering over a corrugated inner hose. The braided metal is used to give the hose a higher resistance to pressure inside the hose and to improve its resistance to wear, while the corrugated inner hose can be bent without it folding.

Hose connections are available in a number of different designs. One example is a connection that is screwed directly onto the hose, whereby the corrugated inner hose is folded to obtain a sealing surface. This method, however, has the disadvantage of leaking easily. Another example of a connection is a sleeve that is pressed against the inner hose, which is deformed while the braided outer hose is cut level with the said inner hose. Another tool is then used to make a groove in the sleeve. The sleeve and connection is then welded to the folded part of the inner hose. This method, however, has the disadvantage of requiring several different tools, making it time-consuming and uneconomic.

Another example of a connection is described in DE 20121607 U1. A formable ring and a compression tool are placed on a corrugated hose. The compression tool comprises an inner and an outer part connected by a screw thread. The inner tool part is placed flush with the hose end, with the edge of the ring contacting a beveled edge of the tool. The outer tool part is placed on the threads, and when the outer part is turned on the threads the ring is pressed inwardly towards the end of the hose and against one of the corrugations on the hose, whereby a seat is formed. Due to the movement of the ring, no braided metal covering can be used on the hose.

A further example is described in US 6 260 584. A clamping ring at the end of the hose connection is deformed by a mounting tool, and the sealing effect is achieved by a rubber sealing. Due to the arrangement with a rubber sealing, the demands regarding high pressure and wear can not be fulfillled.

One object of the present invention is to provide a means and a method of obtaining a seat on the end of a hose onto which the hose connection can be mounted simply, quickly and economically in one single operation.

This object of the invention can be achieved by mounting the hose in a tool, a means of support in the form of a sleeve that is fitted over the hose, a tool is pressed against the edge of the hose and the sleeve, whereby the hose and the sleeve are pressed together. The hose coupling is then welded to the folded part of the inner hose and to the sleeve.

The invention is described more fully in the following with reference to the attached drawings, which illustrate examples of selected embodiments, where
fig. 1 shows a partial cross-section of a metal hose arranged vertically.
fig. 2 shows where the hose is cut and the position to which the means of support is arranged.
fig. 3 shows the forming part applied to the end of the hose and the edge of the support means has started to be driven towards the centre of the hose.
fig. 4 shows how the edge pointing radially inwards is driven away from the free end of the hose
fig. 5 shows when the cut surface makes contact with the closes transition between a peak and a trough.
fig. 6 shows how the folded part of the inner hose is shaped by the forming part to a seat that is suited to the connection being applied.
fig. 7 shows when the forming part has been removed and the position where the covering is cut.
fig. 8 shows the connection applied to the finished seat and the welded joint applied to join the hose and the connection.

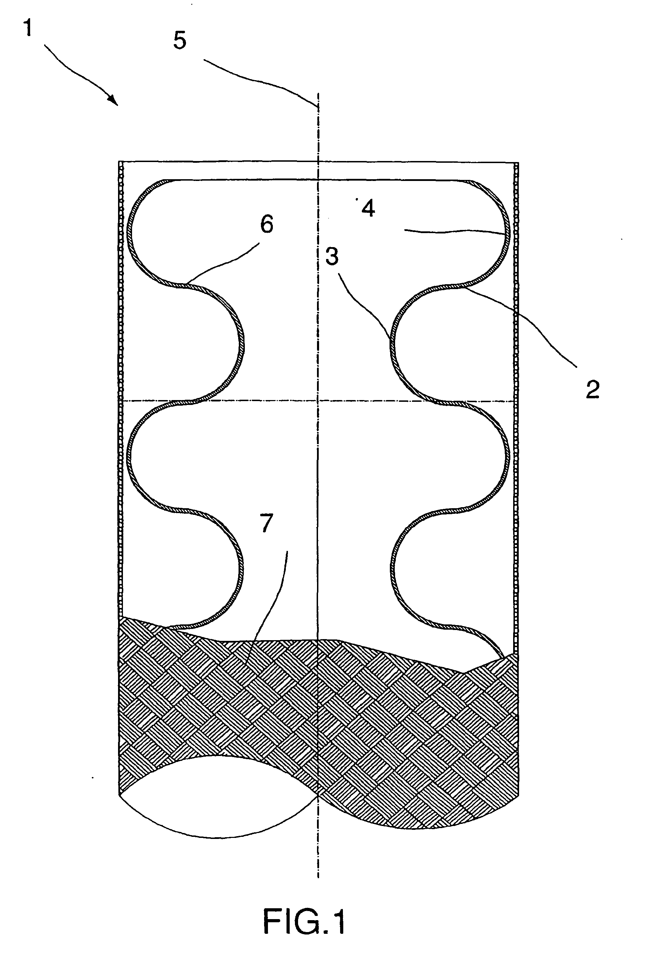

As shown in figure 1, a flexible hose designated with reference number 1 contains an inner, corrugated metal hose 2. In this case, corrugated means a wave shaped longitudinal section with troughs 3 and peaks 4, where a trough 3 is defined as the part that is closest to the centre line 5 of the hose 1 and a peak 4 as the part that is farthest away from the centre line 5. The transition 6 between a peak 4 and a trough 3 is defined as the part where the hose 2 wall is relatively perpendicular to the centre line 5. The corrugated shape is intended to allow bending of the hose 1 without the walls of the hose folding.

Outside hose 1 is arranged a woven metallic covering 7 in the form of a braid and a means of support 8 outside the covering 7 in the form of a sleeve. The metallic covering 7 is intended to protect the corrugated inner hose 2 from wear while it also provides support when bending the hose, prevents the hose from expanding outside its outside diameter when bending and gives the hose an increased compressive strength. In another embodiment, only the corrugated inner hose 2 is used without the metal covering. The function of the support means 8 will be described in more detail below.

Before mounting the connection 10, a forming part 11 in the form of a press tool is used to prepare the end of the hose 9. The forming part 11 comprises an outer 12 and an inner 13 forming section. The outer forming section 12 is an annular wall arranged around the inner forming section 13. The annular wall has an inside diameter that is slightly smaller than the outside diameter of the applied support means 8. Between the annular wall and the inside forming section 13 is arranged an annular gap 14 into which the hose 1 metal covering 7 fits during the pressing phase.

The inside edge of the free end of the wall is arranged with a bevelled edge 15. The larger diameter of the bevelled edge 15 is somewhat larger than the outside diameter of the support means 8. As the press tool moves towards the end of the hose 9, the bevelled edge 15 presses in the free end closest to the end of the hose 9 of the applied support means 8 towards the closest peak 4 of the corrugated inner hose, whereby the edge of the support means 8 provides support for the peak 4 during the pressing phase.

The inner forming section 13 is a cylinder with surrounding wall and bottom surface 16 directed towards the end of the hose 9. The transition of the bottom surface to the surrounding wall is at a relatively perpendicular angle. In another embodiment, the transition is a rounded edge intended to form a rounded flange. The inner forming section 13 has an outside diameter that corresponds with the inside diameter of the connection 10 that is applied in the final phase. The transition between the bottom surface 16 and the surrounding wall is used partly to form a seat 17 during the pressing phase to which the connection is intended to be arranged and partly to press together the double folded section of the hose to a compact double-walled surface of which one part is used during the final welding. The connection 10 comprises a tubular part that in this example is finished with a straight edge intended to be arranged to the seat 17 but can be designed in various ways depending on the application for which it is used. The welding joins the connection to the finished seat 17, support means 8 and the covering 7.

The method of forming described in the following is not valid only for hoses with circular cross section but can also be used on hoses with other cross sections and the following describes the method used based on figure 1 where the hose 1, for means of clarity, is arranged vertically and the outer and inner wave shaped parts seen from the centre line 5 of the corrugated hose 2 are called peak 4 and trough 3 respectively:

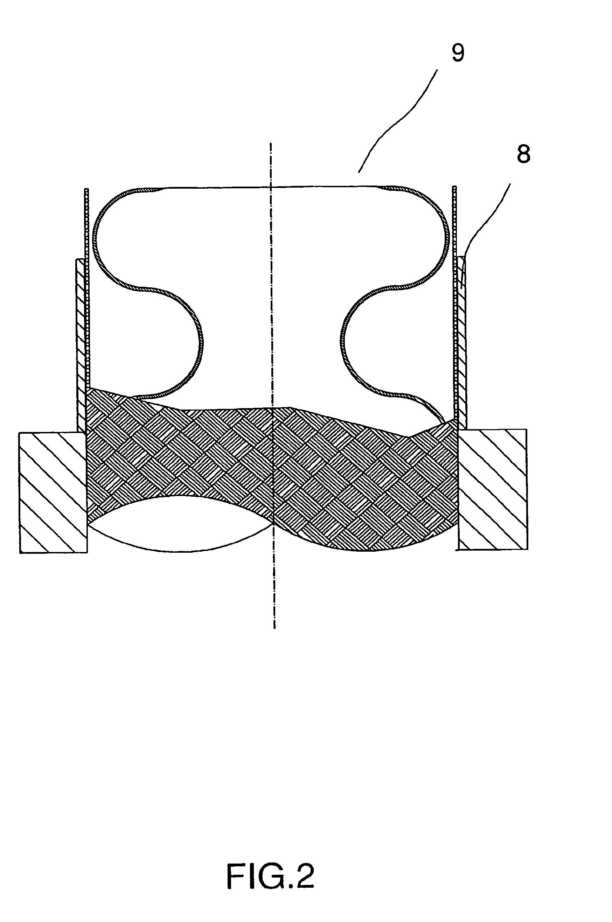

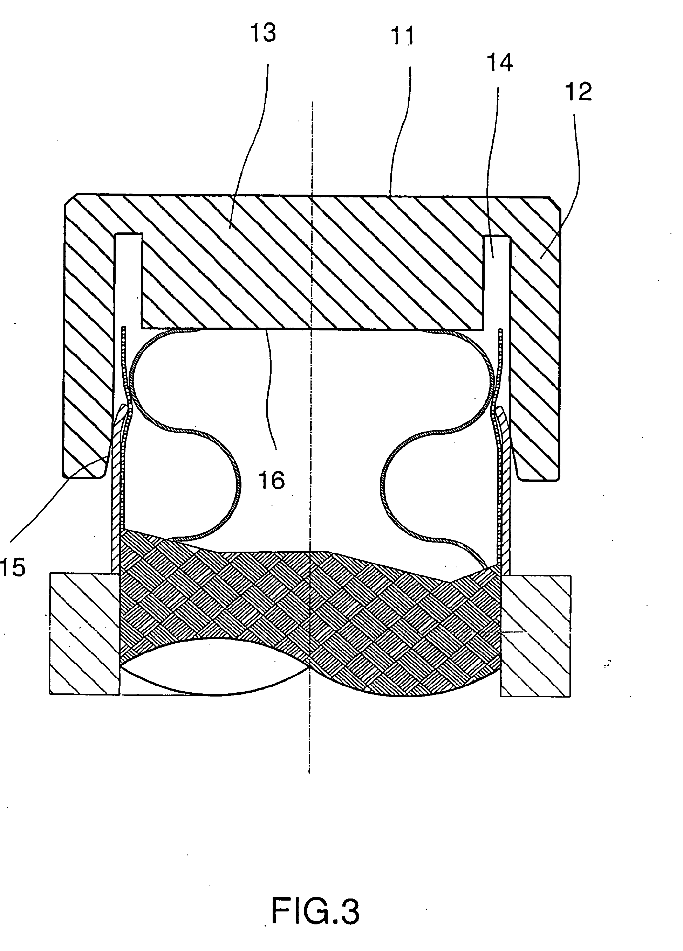

A cut is made on the braid 7 and hose 2 at a position where the hose 2 peak 4 changes into a trough 3 in such a way that the cut surface of the remaining end 9 is directed towards the centre line 5 of the hose 2. The support means 8 is fitted over the covering 7 as in figure 2 to a position where the free end of the support means 8 closest to the end of the hose comes just beyond the next peak 4 of corrugation after the cut. This will prevent the remaining corrugation of the hose from being affected by the pressing phase. The forming part 11 is applied to the cut hose 2 as in figure 3 and pressed against the cut surface in the lengthwise direction of the hose 1. The outer forming section 12 first contacts the free end of the fitted support means 8 closest to the end of the hose, which is driven inwards towards the centre line 5 of the hose 2 by the bevelled edge 15 of the forming section 12. While the forming part 11 continues to move in the longitudinal direction of the hose 1 as in figure 3, the support means 8 is gradually driven inwards while the end of the covering 7 is guided into the surrounding gap 14. When the free end of the support means 8 edge closest to the end of the hose is driven inwards, it makes contact with the corrugated peak 4 of the corrugated inner hose 2.

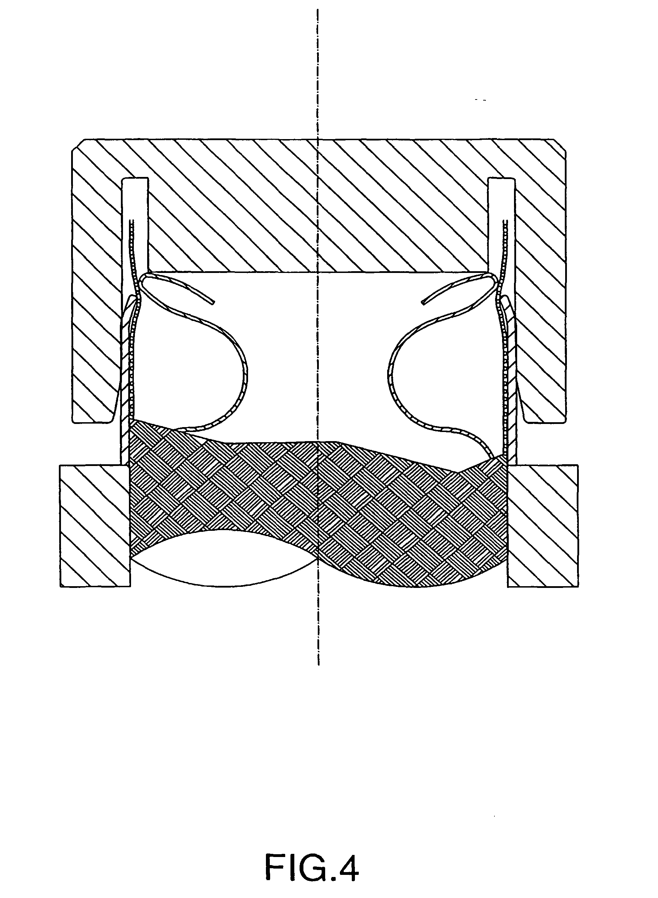

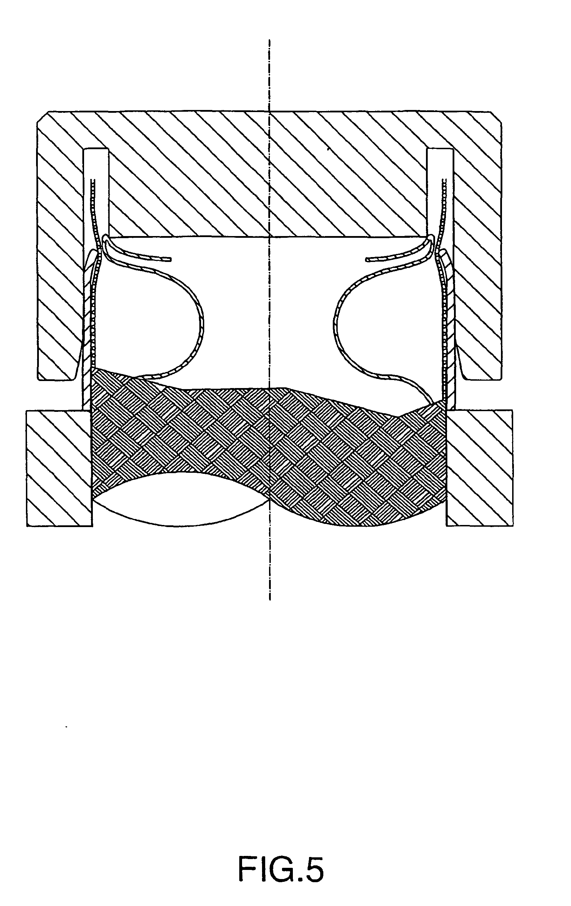

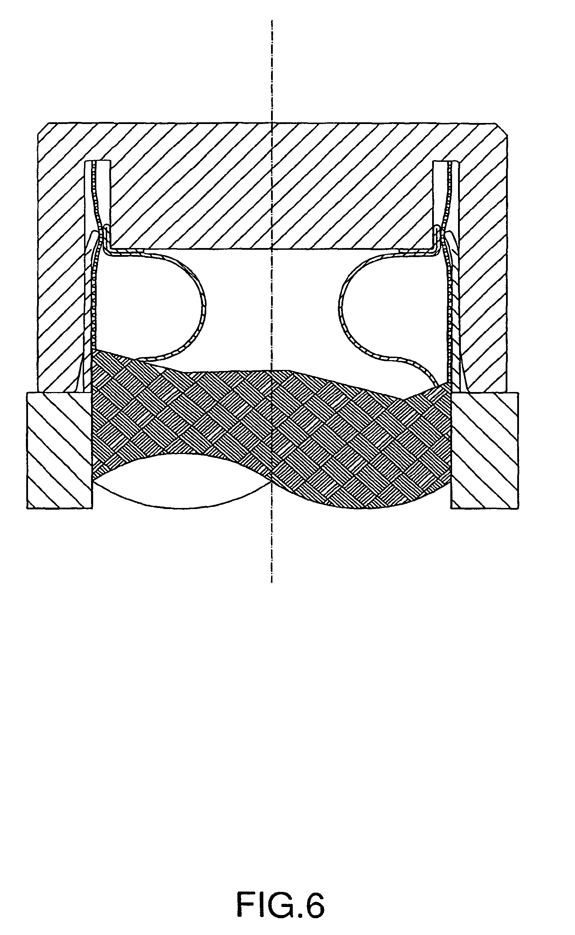

While the forming part continues moving lengthwise along the hose as in figure 4, the flat surface 16 of the inner forming section 13 makes contact with the cut edge of the hose 2, which is pressed in a direction away from the free end of the hose. The end 9 of the hose 2 is pressed farther away until the cut surface makes contact with the transition 6 between the next peak 4 and trough 3 as in figure 5. At this contact, the sudden radial outer section of the hose 2 that is obtained during this movement is pressed past the edge of the forming section 13 out towards the braided covering 7 and the free end of the support means 8 closest to the end of the hose with the sudden radial outer section of the hose 2 supporting the inward driven edge of the fitted support means 8. During the final downward movement of the forming part 11 as shown in figure 6 when the folded section of the hose 2 is between the inner forming section 13 of the forming part 11 and the support means 8, the section of hose 2 that is now folded is compressed and follows the inner forming section 13 to rest against the free end of the support means 8 closest to the end of the hose to form a seat 17.

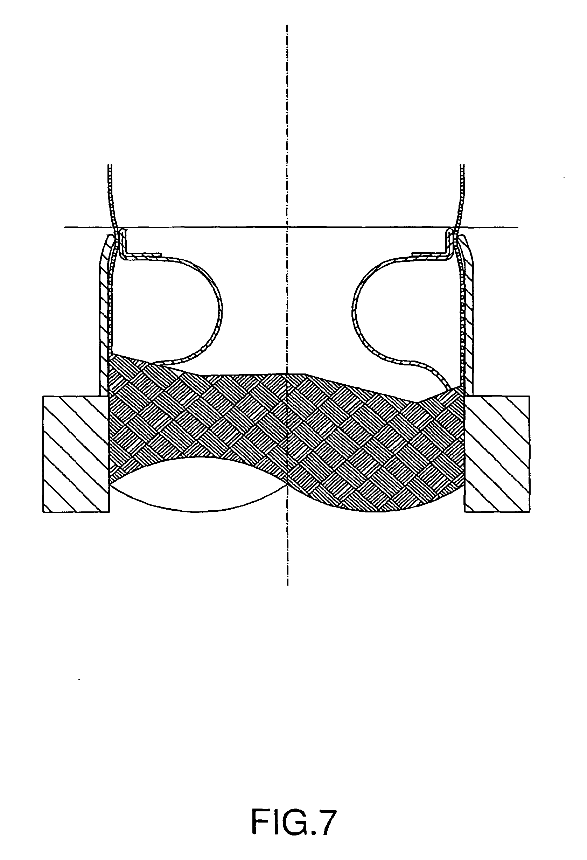

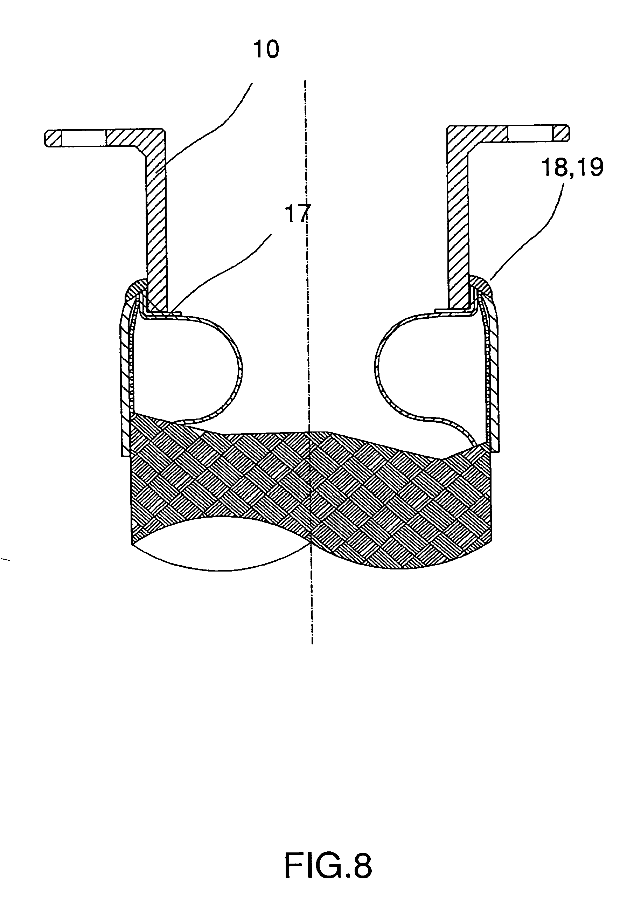

When the forming phase is completed, the forming section 11 is removed from the finished hose end 9, whereby the braided covering 7 extends past the seat 17. This part of the covering 7 can be removed in a suitable manner so it is flush with the free edge of the seat 17 as shown in figure 7. The connection 10 is placed in the finished seat 17, thereby making a surrounding shoulder 18 with inside measurement corresponding to the outside measurement of the connection 10. According to figure 8, as a final phase, a weld run 19 is placed in the said shoulder 18, whereby the connection is joined to the support means 8, covering 7 and inner hose 2. The joining of the connection to the seat can be by means of an automatic welder, gluing or other method of joining.

The present invention is not limited to the above description and as illustrated in the drawings but can be changed and modified in a number of different ways within the framework of the idea of invention specified in the following claims.

## Claims

1. Method of mounting a hose connection (10) to a flexible metal hose (1) comprising a corrugated inner hose (2) surrounded by a braided covering (7), which method involves the following steps:
a) that the corrugated inner hose (2) and the braided covering (7) are cut in the transition between a trough (3) and a peak (4) on the corrugation so that the end of the remaining corrugation (9) is directed radially inward,
b) that a support means (8) is arranged to the outside of the covering (7) in a position where the free end of the support means (8) closest to the end of the hose is just in front of the next peak (4) on the end of the hose (9),
c) that a forming part (11) is applied to the end of the hose (9),
d) that the free end of the support means (8) closest to the end of the hose and the covering (7) is pressed radially inward by the forming part (11) to make a support for the inner hose (2),
e) that the end of the covering (7) is guided into a groove (14) arranged in the forming part (11),
f) that the radially inward directed part of the hose end (9) is pressed towards the closest transition (6) between a trough (3) and a peak (4) to form a seat (17), the free edge of which is beyond the free edge of the support means (8),
g) that the forming part (11) is removed from the hose (2),
h) that the covering (7) is cut flush with the free edge of the seat (17),
i) that the connection (10) is arranged to the seat (17),
j) that the connection (10) is joined to the seat (17), covering (7) and support means (8).

2. Method according to claim 1, **characterised in that** the seat (17), covering (7) and support means (8) are joined to the connection (10) by means of welding.

3. Method according to claim 1, **characterised in that** the connection (10) is applied flush against the seat (17) to enable the use of automated methods of joining.

4. Method according to claim 1, **characterised in that** steps b - f are performed in a single operation.

5. Means of mounting a hose connection (10) to a flexible metal hose (1) according to any of the preceding claims, the means comprising a hose support means (8) and a forming part (11), **characterised in that** the forming part (11) is made of an inner (13) and an outer (12) forming section with a groove (14) arranged therebetween, which is intended to receive the end of the covering (7) and the support means (8), whereby the outer forming section (12) is longer than the inner forming section (13) and has an inner diameter which is less than the outer diameter of the support means (8).

6. Means of mounting a hose connection in accordance with claim 5, **characterised in that** a part of the inside edge of the free end of the outer forming section (12) is bevelled (15) with a larger dimension slightly larger than the outside dimension of the support means (8).

7. Means of mounting a hose connection in accordance with any one of claims 5 - 6, **characterised in that** the inner forming section (13) has an essentially flat surface (16).

8. Means of mounting a hose connection in accordance with claim 7, **characterised in that** the edge of the inner forming section (13) containing the flat surface (16) is rounded/bevelled.

9. Means of mounting a hose connection in accordance with any one of claims 5 - 8, **characterised in that** the support means (8) comprises a sleeve which is intended to surround the hose (2) and covering (7).

## Patentansprüche

1. Verfahren zur Befestigung einer Schlauchverbindung (10) an einem flexiblen Metallschlauch (1), der einen von einer geflochtenen Ummantelung (7) umgegebenen inneren Wellschlauch (2) aufweist, welches Verfahren die folgenden Schritte umfasst:
a) dass der innere Wellschlauch (2) und die geflochtene Ummantelung (7) beim Übergang zwischen einem Tiefpunkt (3) und einem Höhepunkt (4) der Wellung durchschnitten werden, so dass das Ende der verbleibenden Wellung (9) radial nach innen weist,
b) dass auf der Aussenseite der Ummantelung (7) ein Stützmittel (8) angebracht wird in einer Position, in der sich das dem Schlauchende zugewandte freie Ende des Stützmittels (8) unmittelbar vor dem nächsten Höhepunkt (4) am Schlauchende (9) befindet,
c) dass ein Formteil (11) auf das Schlauchende (9) aufgesetzt wird,
d) dass das dem Schlauchende zugewandte freie Ende des Stützmittels (8) und die Ummantelung (7) durch das Formteil (11) radial nach innen gedrückt wird, um eine Stützung für den Innenschlauch (2) zu bilden,
e) dass das Ende der Ummantelung (7) in eine im Formteil (11) ausgebildete Nut (14) eingeführt wird,
f) dass der radial nach innen weisende Teil des Schlauchendes (9) zum nächstliegenden Übergang (6) zwischen einem Tiefpunkt (3) und einem Höhepunkt (4) gedrückt wird, um einen Sitz (17) zu bilden, dessen freie Kante jenseits der freien Kante des Stützmittels (8) liegt,
c) dass das Formteil (11) vom Schlauch (2) entfernt wird,
h) dass die Ummantelung (7) bündig mit der freien Kante des Sitzes (17) abgeschnitten wird,
i) dass die Verbindung (10) am Sitz angebracht wird (17),
j) dass die Verbindung (10) mit dem Sitz (17), der Ummantelung (7) und dem Stützmittel (8) verbunden wird.

2. Verfahren nach Anspruch 1, **dadurch gekennzeichnet, dass** der Sitz (17), die Ummantelung (7) und das Stützmittel (8) durch Schweissen mit der Verbindung (10) verbunden werden.

3. Verfahren nach Anspruch 1, **dadurch gekennzeichnet, dass** die Verbindung (10) bündig an den Sitz (17) angebracht wird, damit automatisierte Verbindungsverfahren verwendet werden können.

4. Verfahren nach Anspruch 1, **dadurch gekennzeichnet, dass** die Schritte b - f in einem einzigen Arbeitsgang durchgeführt werden.

5. Mittel zur Befestigung einer Schlauchverbindung (10) an einem flexiblen Metallschlauch (1) nach einem der vorstehenden Ansprüche, wobei das Mittel ein Schlauchstützmittel (8) und ein Formteil (11) aufweist, **dadurch gekennzeichnet, dass** das Formteil (11) aus einem inneren (13) und einem äusseren (12) Formungsabschnitt mit einer dazwischenliegenden Nut (14) besteht, die dazu vorgesehen ist, das Ende der Ummantelung (7) und das Stützmittel (8) aufzunehmen, wobei der äussere Formungsabschnitt (12) länger als der innere Formungsabschnitt (13) ist und einen Innendurchmesser aufweist, der kleiner ist als der Aussendurchmesser des Stützmittels (8).

6. Mittel zur Befestigung einer Schlauchverbindung nach Anspruch 5, **dadurch gekennzeichnet, dass** ein Teil des inneren Rands am freien Ende des äusseren Formungsabschnitts (12) abgeschrägt (15) ist mit einer grösseren Abmessung, die etwas grösser ist als das Aussenmass des Stützmittels (8).

7. Mittel zur Befestigung einer Schlauchverbindung nach einem der Ansprüche 5 bis 6, **dadurch gekennzeichnet, dass** der innere Formungsabschnitt (13) eine im Wesentlichen ebene Fläche (16) aufweist.

8. Mittel zur Befestigung einer Schlauchverbindung nach Anspruch 7, **dadurch gekennzeichnet, dass** der die ebene Fläche (16) umgebende Rand des inneren Formungsabschnitts (13) abgerundet/abgeschrägt ist.

9. Mittel zur Befestigung einer Schlauchverbindung nach einem der Ansprüche 5 bis 8, **dadurch gekennzeichnet, dass** das Stützmittel (8) eine Hülse aufweist, die dazu vorgesehen ist, den Schlauch (2) und die Ummantelung (7) zu umgeben.

## Revendications

1. Procédé de fixation d'un raccord de tuyau (10) à un tuyau métallique flexible (1) comprenant un tuyau intérieur ondulé (2) entouré d'un enrobage tressé (7), lequel procédé inclut les étapes suivantes:
a) que le tuyau intérieur ondulé (2) et l'enrobage tressé (7) sont coupés à l'endroit de la transition entre un creux (3) et un sommet (4) de l'ondulation, de telle manière que l'extrémité de l'ondulation (9) restante est tournée vers l'intérieur radialement,
b) qu'un moyen de support (8) est agencé sur l'extérieur de l'enrobage (7) dans une position où l'extrémité libre du moyen de support (8) en regard de l'extrémité du tuyau se trouve juste avant le prochain sommet (4) à l'extrémité du tuyau (9),
c) qu'une pièce de formage (11) est appliquée à l'extrémité du tuyau (9),
d) que l'extrémité libre du moyen de support (8) en regard de l'extrémité du tuyau et l'enrobage (7) sont pressés vers intérieur radialement par la pièce de formage (11) afin de former un support pour le tuyau intérieur (2),
e) que l'extrémité de l'enrobage (7) est guidée dans une rainure (14) agencée dans la pièce de formage (11),
f) que la partie de l'extrémité du tuyau (9) qui est tournée vers l'intérieur radialement est pressée vers la transition (6) la plus proche entre un creux (3) et un sommet (4) afin de former un siège (17) dont l'arête libre se trouve au-delà de l'arête libre du moyen de support (8),
c) que la pièce de formage (11) est enlevée du tuyau (2),
h) que l'enrobage (7) est coupé à fleur de l'arête libre du siège (17),
i) que le raccord (10) est placé sur le siège (17),
j) que le raccord (10) est relié au siège (17), à l'enrobage (7) et au moyen de support (8).

2. Procédé selon la revendication 1, **caractérisé en ce que** le siège (17), l'enrobage (7) et le moyen de support (8) sont reliés au raccord (10) par soudage.

3. Procédé selon la revendication 1, **caractérisé en ce que** le raccord (10) est affleuré au siège (17) afin de permettre la mise en oeuvre de procédés d'assemblage automatisés.

4. Procédé selon la revendication 1, **caractérisé en ce que** les étapes b à f sont accomplies en une seule opération.

5. Moyen de fixation d'un raccord de tuyau (10) à un tuyau métallique flexible (1) selon l'une quelconque des revendications précédentes, le moyen comprenant un moyen de support (8) du tuyau et une pièce de formage (11), **caractérisé en ce que** la pièce de formage (11) est constituée d'une section de formage intérieure (13) et extérieure (12) entre lesquelles est agencée une rainure (14) destinée à recevoir l'extrémité de l'enrobage (7) et le moyen de support (8), la section de formage extérieure (12) étant plus longue que la section de formage intérieure (13) et ayant un diamètre intérieur inférieur au diamètre extérieur du moyen de support (8).

6. Moyen de fixation d'un raccord de tuyau selon la revendication 5, **caractérisé en ce qu'**une partie du bord intérieur de l'extrémité libre de la section de formage extérieure (12) est chanfreinée (15) avec une plus grande dimension légèrement supérieure à la dimension extérieure du moyen de support (8).

7. Moyen de fixation d'un raccord de tuyau selon l'une quelconque des revendications 5 à 6, **caractérisé en** la section de formage intérieure (13) a une surface (16) essentiellement plate.

8. Moyen de fixation d'un raccord de tuyau selon la revendication 7, **caractérisé en que** le bord de la section de formage intérieure (13) qui comprend la surface plate (16) est arrondi/chanfreiné.

9. Moyen de fixation d'un raccord de tuyau selon l'une quelconque des revendications 5 à 8, **caractérisé en ce que** le moyen de support (8) comprend une douille destinée à entourer le tuyau (2) et l'enrobage (7).
